# EUROPEAN PATENT SPECIFICATION

(11) **EP 4 328 085 B1**
(45) Date of publication and mention of the grant of the patent: **20.08.2025**
(21) Application number: 22848142.0
(22) Date of filing: 24.06.2022
(51) Int. Cl.: B60N 2/28

(54) **SUPPORTING LEG TELESCOPIC STRUCTURE AND CHILD SAFETY SEAT**
TELESKOPISCHE STÜTZBEINSTRUKTUR UND KINDERSICHERHEITSSITZ
STRUCTURE TÉLESCOPIQUE DE PIED DE SUPPORT ET SIÈGE DE SÉCURITÉ POUR ENFANT

(30) Priority: 30.07.2021 CN 202121764031 U
(43) Date of publication of application: 28.02.2024
(73) Proprietor: Ningbo Baby First Baby Products Co., Ltd., Yuyao, Zhejiang 315412 (CN)
(72) Inventor: ZHOU, Xiaolin, Ningbo, Zhejiang 315412 (CN)
(74) Representative: Herrmann, Uwe
(86) International application number: PCT/CN2022/101083
(87) International publication number: WO 2023/005535

(56) References cited:
- CN-A- 102 848 946
- CN-A- 107 839 555
- CN-A- 108 790 971
- CN-A- 110 979 114
- CN-A- 110 979 114
- CN-A- 114 435 205
- CN-U- 206 217 690
- CN-U- 211 765 092
- CN-U- 212 950 269
- CN-U- 215 621 544
- CN-U- 215 621 545
- JP-A- 2001 105 940

## Description

### TECHNICAL FIELD

The present invention relates to the technical field of child safety seats, and particularly to a telescopic support leg structure and a child safety seat including the same.

### BACKGROUND

With the improvement of people's awareness of driving safety, child safety seats have become a must-have for infants and children in vehicles. To prevent the child safety seat from moving due to inertia in a case such as sudden braking, a support leg is generally arranged at the front end of the base of the child safety seat, to support and fix the position of the child safety seat. To allow the support leg to be received in the base when not in use and to be effectively supported by a chassis of a vehicle when in use, the support leg is generally designed as a telescopic structure. However, telescopic support leg structures in the prior art involve a large number of parts, a heavy weight, and complicated installation operations. CN 110 979 114 discloses a telescopic support leg.

### SUMMARY

To solve at least one of the above problems, the present invention first provides a telescopic support leg structure, including a base and a support leg pedestal slidably connected to the base, where a reinforcing rod is mounted on the base, the support leg pedestal is slidably connected to the reinforcing rod, and a pressing block and a support block are arranged at an end of the reinforcing rod connected to the support leg pedestal; and the telescopic support leg structure further includes a connecting rod extending through the support leg pedestal, where the connecting rod abuts against an upper surface of the reinforcing rod, a first rail configured to engage with the connecting rod is formed between the support block and the upper surface of the reinforcing rod, the support leg pedestal is provided with a first flange, and a second rail configured to engage with the first flange is formed between the pressing block and the base.

Optionally, two reinforcing rods are provided, and the two reinforcing rods are symmetrically arranged on a left side and a right side of the support leg pedestal, respectively.

Optionally, the base is provided with a third rail, and a sliding column configured to engage with the third rail is arranged on the support leg pedestal.

Optionally, the sliding column is connected to a fastener configured to prevent the sliding column from disengaging from the third rail.

Optionally, the reinforcing rod is made of a metal.

Optionally, the support block and the pressing block are integrally formed with the reinforcing rod.

Optionally, the support block has a U-shaped slot with an opening facing rearward, and when the support leg pedestal is pulled forward to an outermost position, the connecting rod is engaged into the U-shaped slot.

Optionally, the support leg pedestal is provided with a second flange, and when the support leg pedestal is pulled forward to an outermost position, the second flange abuts against an upper surface of the pressing block.

Optionally, a limiting bump configured to engage with the second flange is further arranged on the upper surface of the pressing block.

Compared with the prior art, in the telescopic support leg structure of the present disclosure, the reinforcing rod is arranged between the base and the support leg pedestal, and the pressing block and the support block are arranged on the reinforcing rod, so that the first rail is formed between the support block and the reinforcing rod, and the second rail is formed between the pressing block and the base. The first rail and the second rail arranged one above the other are slidably engaged with the connecting rod and the first flange on the support leg pedestal, respectively. In this way, the support leg pedestal can be telescoped forward and backward relative to the base. Such a structure having two layers of rails enables a more stable and reliable telescoping process of the support leg pedestal, and reduces the shaking gap between the support leg pedestal and the base, and involves a small number of parts, a reduced overall weight, and more easy and convenient installation operations.

In addition, the present invention provides a child safety seat, including the telescopic support leg structure as described above.

Compared with the prior art, the child safety seat of the present invention has the same advantages as those of the telescopic support leg structure compared with the prior art, so the details will not be repeated herein.

### BRIEF DESCRIPTION OF THE DRAWINGS

FIG. 1 is an exploded view of a telescopic support leg structure according to an embodiment of the present invention.
FIG. 2 is a structural diagram of a telescopic support leg structure according to an embodiment of the present invention when a support leg is in a pulled-out state.
FIG. 3 is an enlarged view of part A in FIG. 2.
FIG. 4 is a partial cross-sectional view of a telescopic support leg structure according to an embodiment of the present invention when a support leg is in a pulled-out state.
FIG. 5 is a partial structural diagram of a reinforcing rod according to an embodiment of the present invention.
FIG. 6 is a structural diagram of a telescopic support leg structure according to an embodiment of the present invention when a support leg is in a retracted state.
FIG. 7 is an enlarged view of part B in FIG. 6.
FIG. 8 is a cross-sectional view of a telescopic support leg structure according to an embodiment of the present invention.

### List of reference numerals:

1. base; 11. third rail; 2. support leg pedestal; 21. first flange; 22. sliding column; 23. fastener; 24. second flange; 3. reinforcing rod; 31. pressing block; 311. limiting bump; 32. support block; 321. U-shaped slot; 4. connecting rod; 5. first rail; 6. second rail; 7. support leg.

### DETAILED DESCRIPTION OF THE EMBODIMENTS

To make the objectives, technical features, and advantages of the present invention more comprehensible, specific embodiments of the present invention will be described in detail below with reference to the accompanying drawings.

In the description of the present invention, it should be understood that orientation or position relationships indicated by the terms such as "upper" and "lower" are orientation or position relationships based on the normal use of the product.

The terms "first" and "second" are used herein for descriptive purposes, and are not intended to indicate or imply relative importance or implicitly point out the number of the indicated technical features. Therefore, the feature defined by "first" or "second" may explicitly or implicitly include at least one such feature. In the drawings of the embodiments of the present disclosure, a coordinate system XYZ is provided, where the positive direction of the X axis represents left, the negative direction of the X axis represents right, the positive direction of the Y axis represents front, the negative direction of the Y axis represents rear, the positive direction of the Z axis represents up, and the negative direction of the Z axis represents down.

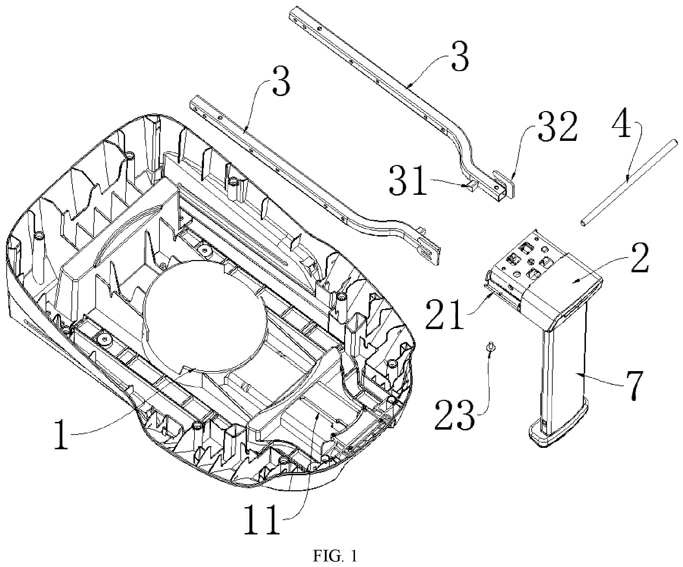

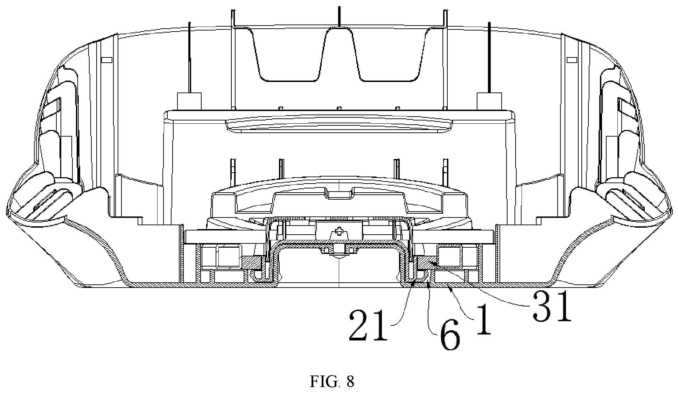

An embodiment of the present invention provides a telescopic support leg structure. Referring to FIG. 1, FIG. 2, FIG. 3, and FIG. 8, the telescopic support leg structure includes a base 1 and a support leg pedestal 2 slidably connected to the base 1. A reinforcing rod 3 is mounted on the base 1. The support leg pedestal 2 is slidably connected to the reinforcing rod 3. A pressing block 31 and a support block 32 are arranged at an end of the reinforcing rod 3 connected to the support leg pedestal 2. The telescopic support leg structure further includes a connecting rod 4 extending through the support leg pedestal 2. The connecting rod 4 abuts against an upper surface of the reinforcing rod 3. A first rail 5 configured to engage with the connecting rod 4 is formed between the support block 32 and the upper surface of the reinforcing rod 3. The support leg pedestal 2 is provided with a first flange 21. A second rail 6 configured to engage with the first flange 21 is formed between the pressing block 31 and the base 1.

The reinforcing rod 3 is fixedly connected to the base 1 through a fastener 23 such as a screw, and the support leg pedestal 2 can move forward and backward relative to the base 1 and the reinforcing rod 3. The connecting rod 4 is of a smooth cylindrical structure, and during the forward and backward movement process, the support leg pedestal 2 can drive the connecting rod 4 to move synchronously in the first rail 5. The first flange 21 is located below the connecting rod 4, the second rail 6 is formed between a lower surface of the pressing block 31 and an upper surface of the base 1, and during the forward and backward movement process, the support leg pedestal 2 can drive the first flange 21 to move synchronously in the second rail 6. The support block 32 is arranged in front of the pressing block 31, the first rail 5 is located above the second rail 6, and the support leg pedestal 2 can move forward and backward relative to the base 1 through the two layers of rails.

In the telescopic support leg structure of this embodiment, the reinforcing rod 3 is arranged between the base 1 and the support leg pedestal 2, and the pressing block 31 and the support block 32 are arranged on the reinforcing rod 3, so that the first rail 5 is formed between the support block 32 and the reinforcing rod 3, and the second rail 6 is formed between the pressing block 31 and the base 1. The first rail 5 and the second rail 6 arranged one above the other are slidably engaged with the connecting rod 4 and the first flange 21 on the support leg pedestal 2, respectively. In this way, the support leg pedestal 2 can be telescoped forward and backward relative to the base 1. Such a structure having two layers of rails enables a more stable and reliable telescoping process of the support leg pedestal 2, and reduces the shaking gap between the support leg pedestal 2 and the base 1, and involves a small number of parts, a reduced overall weight, and more easy and convenient installation operations.

Optionally, as shown in FIG. 1, two reinforcing rods 3 are provided, and the two reinforcing rods 3 are symmetrically arranged on the left side and the right side of the support leg pedestal 2, respectively.

The connecting rod 4 extends through the left side and the right side of the support leg pedestal 2, and the left end and the right end of the connecting rod 4 respectively abut against the upper surfaces of the two reinforcing rods 3, and the two ends of the connecting rod 4 are each engaged with the respective support block 32. The left side and the right side of a lower end of the support leg pedestal 2 are each provided with a first flange 21, and each first flange 21 is engaged with the respective pressing block 31. In this embodiment, the number of reinforcing rods 3 is designed to be two, to make the telescopic movement of the support leg pedestal 2 more stable and reliable.

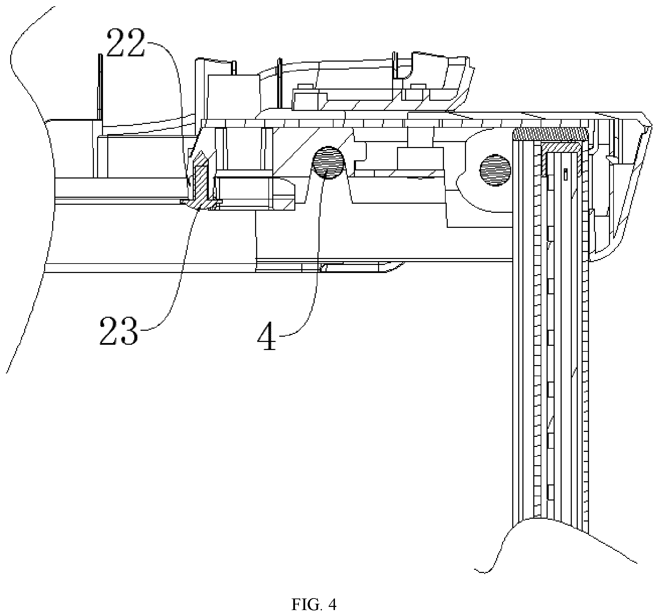

Optionally, as shown in FIG. 1 and FIG. 4, the base 1 is provided with a third rail 11, and a sliding column 22 configured to engage with the third rail 11 is arranged on the support leg pedestal 2.

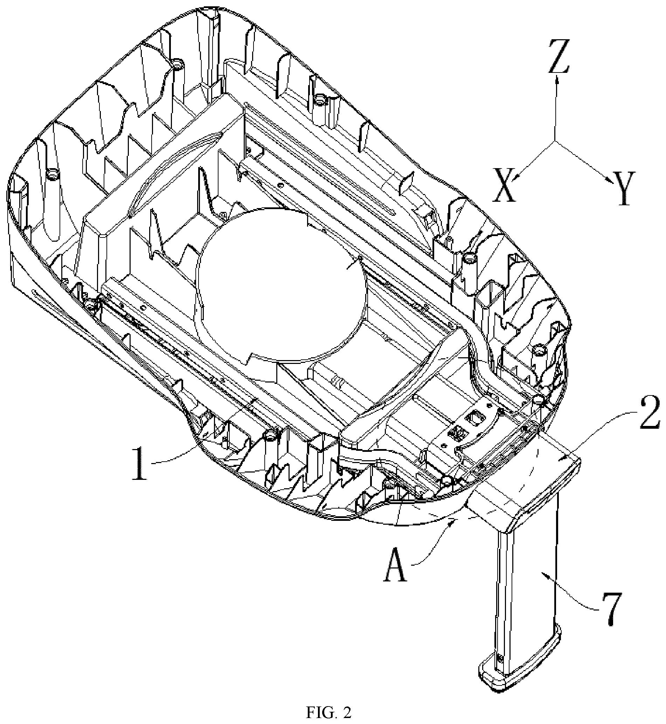

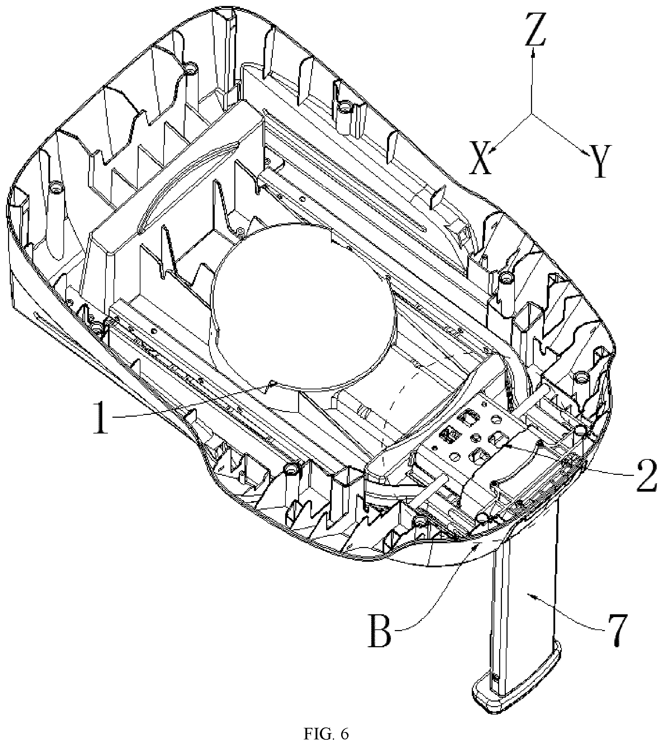

The length direction of the third rail 11 is consistent with the front-rear direction. The sliding column 22 is arranged at a rear end of the support leg pedestal 2. A support leg 7 is hingedly connected to a front end of the support leg pedestal 2. When the sliding column 22 moves to a rearmost end of the third rail 11, the support leg 7 is in a retracted state (as shown in FIG. 2). When the sliding column 22 moves to a frontmost end of the third rail 11, the support leg 7 is in a pulled-out state (as shown in FIG. 6).

In this embodiment, with the design of the sliding column 22 and the third rail 11 that are slidably connected to each other, the slidable connection between the support leg pedestal 2 and the base 1 in the front-rear direction is realized, and the support leg pedestal 2 will not tilt during the sliding process.

Optionally, as shown in FIG. 1, FIG. 2, and FIG. 3, the sliding column 22 is connected to a fastener 23 configured to prevent the sliding column 22 from disengaging from the third rail 11.

The fastener 23 is configured to limit the vertical movement of the sliding column 22 relative to the third rail 11, i.e., prevent the support leg pedestal 2 from moving vertically relative to the base 1. The fastener 23 is preferably a screw having a threaded rod and a screw cap. A diameter of the screw cap is greater than a width of the third rail 11 in the left-right direction. The screw cap is located below the third rail 11. The threaded rod extending through the third rail 11 is fixedly connected to the sliding column 22.

Optionally, as shown in FIG. 1, the reinforcing rod 3 is made of a metal. The reinforcing rod 3 is a hollow structure to ensure that the overall structure has a light weight. The reinforcing rod 3 is made of a metal piece to ensure the deformation resistance of the reinforcing rod 3.

Optionally, as shown in FIG. 1, the support block 32 and the pressing block 31 are integrally formed with the reinforcing rod 3. The support block 32 and the pressing block 31 may be fixedly connected to the reinforcing rod 3 by die casting or welding separately. In this embodiment, the support block 32, the pressing block 31, and the reinforcing rod 3 are designed to be integrally formed, and therefore can be assembled as one component, to facilitate the installation.

Optionally, as shown in FIG. 2, FIG. 3, and FIG. 5, the support block 32 has a U-shaped slot 321 with an opening facing rearward, and when the support leg pedestal 2 is pulled forward to an outermost position, the connecting rod 4 is engaged into the U-shaped slot 321.

When the support leg 7 is supported by a chassis of a vehicle, the connecting rod 4 supports an inner wall of the U-shaped slot 321 upwards, to prevent the support leg pedestal 2 from disengaging from the reinforcing rod 3 in the forward and backward movement process, and ensure the firm connection between the support leg pedestal 2 and the base 1 especially when the support leg pedestal 2 is located at the outermost position and is stressed.

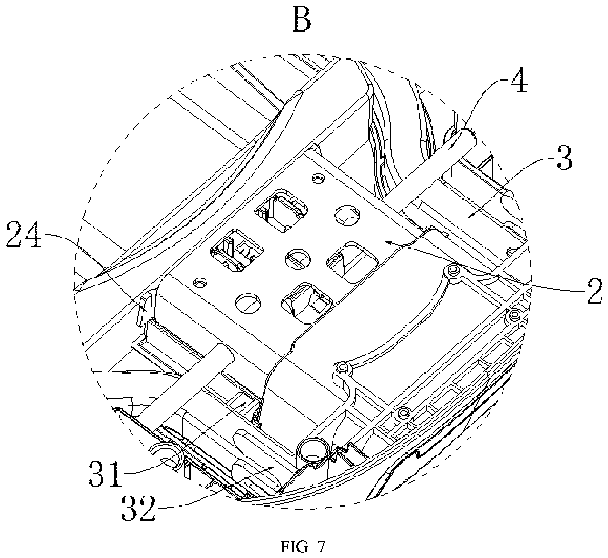

Optionally, as shown in FIG. 2, FIG. 3, and FIG. 7, the support leg pedestal 2 is provided with a second flange 24, and when the support leg pedestal 2 is pulled forward to the outermost position, the second flange 24 abuts against an upper surface of the pressing block 31.

The left side and the right side of the rear end of the support leg pedestal 2 are each provided with a second flange 24. When the support leg 7 is pulled forward to the outermost position, the second flange 24 on each side abuts against the upper surface of the respective pressing block 31. When the support leg 7 is supported by the chassis of the vehicle, the second flange 24 supports the pressing block 31 downward, and the connecting rod 4 supports the support block 32 upward, to form a strong supporting lever, so that the support leg 7 can be firmly supported by the chassis of the vehicle.

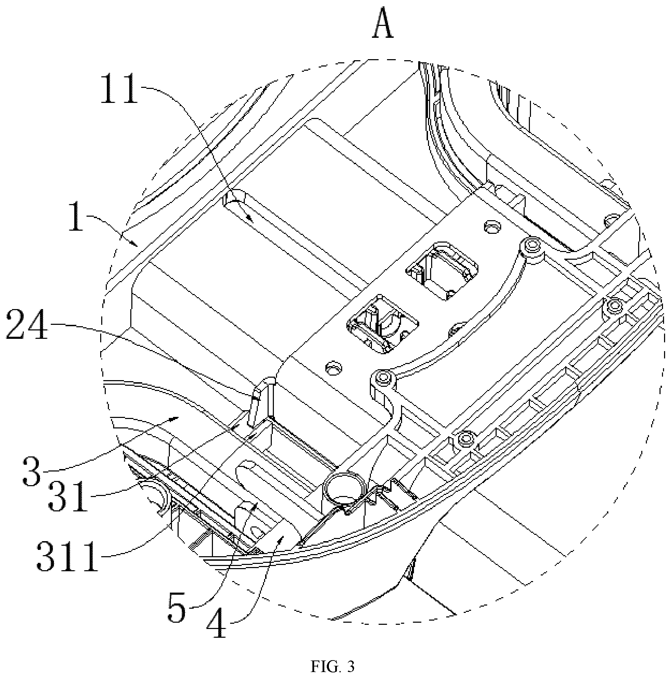

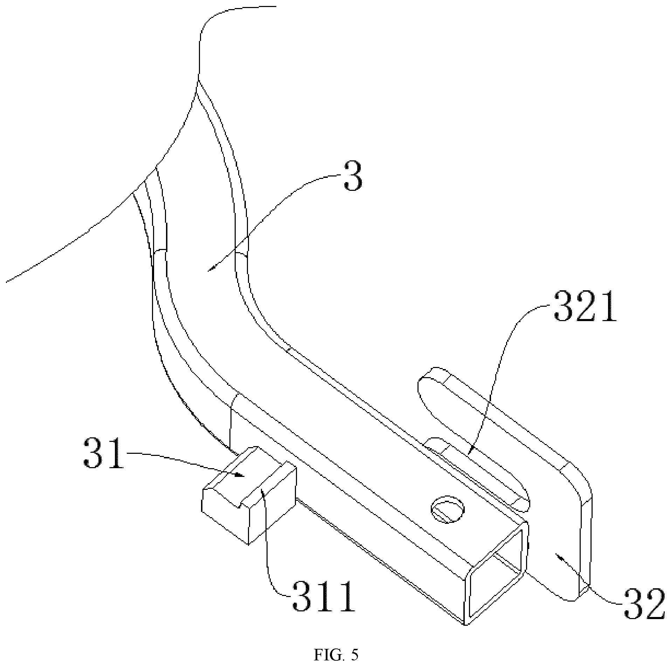

Optionally, as shown in FIG. 3 and FIG. 5, a limiting bump 311 configured to engage with the second flange 24 is further arranged on the upper surface of the pressing block 31.

The limiting bump 311 is arranged at a front end of the upper surface of the pressing block 31, so that when the support leg pedestal 2 moves to the outermost position, the second flange 24 abuts against the limiting bump 311. In this embodiment, the arrangement of the limiting bump 311 configured to engage with the second flange 24 ensures that the second flange 24 can be engaged with the pressing block to prevent the second flange 24 from disengaging from the pressing block 31 during the forward and backward movement of the support leg pedestal 2.

Another embodiment of the present disclosure provides a child safety seat, including the telescopic support leg structure as described above.

In the child safety seat of this embodiment, the reinforcing rod 3 is arranged between the base 1 and the support leg pedestal 2, and the pressing block 31 and the support block 32 are arranged on the reinforcing rod 3, so that the first rail 5 is formed between the support block 32 and the reinforcing rod 3, and the second rail 6 is formed between the pressing block 31 and the base 1. The first rail 5 and the second rail 6 arranged one above the other are slidably engaged with the connecting rod 4 and the first flange 21 on the support leg pedestal 2, respectively. In this way, the support leg pedestal 2 can be telescoped forward and backward relative to the base 1. Such a structure having two layers of rails enables a more stable and reliable telescoping process of the support leg pedestal 2, and reduces the shaking gap between the support leg pedestal 2 and the base 1, and involves a small number of parts, a reduced overall weight, and more easy and convenient installation operations.

## Claims

1. A telescopic support leg structure, comprising a base (1) and a support leg pedestal (2) slidably connected to the base (1), wherein a reinforcing rod (3) is mounted on the base (1), the support leg pedestal (2) is slidably connected to the reinforcing rod (3), and a pressing block (31) and a support block (32) are arranged at an end of the reinforcing rod (3) connected to the support leg pedestal (2); and the telescopic support leg structure further comprises a connecting rod (4) extending through the support leg pedestal (2), wherein the connecting rod (4) abuts against an upper surface of the reinforcing rod (3), a first rail (5) configured to engage with the connecting rod (4) is formed between the support block (32) and the upper surface of the reinforcing rod (3), the support leg pedestal (2) is provided with a first flange (21), and a second rail (6) configured to engage with the first flange (21) is formed between the pressing block (31) and the base (1).

2. The telescopic support leg structure according to claim 1, wherein two reinforcing rods (3) are provided, and the two reinforcing rods (3) are symmetrically arranged on a left side and a right side of the support leg pedestal (2), respectively.

3. The telescopic support leg structure according to claim 1, wherein the base (1) is provided with a third rail (11), and a sliding column (22) configured to engage with the third rail (11) is arranged on the support leg pedestal (2).

4. The telescopic support leg structure according to claim 3, wherein the sliding column (22) is connected to a fastener (23) configured to prevent the sliding column (22) from disengaging from the third rail (11).

5. The telescopic support leg structure according to claim 1, wherein the reinforcing rod (3) is made of a metal.

6. The telescopic support leg structure according to claim 1, wherein the support block (32) and the pressing block (31) are integrally formed with the reinforcing rod (3).

7. The telescopic support leg structure according to claim 1, wherein the support block (32) has a U-shaped slot (321) with an opening facing rearward, and when the support leg pedestal (2) is pulled forward to an outermost position, the connecting rod (4) is engaged into the U-shaped slot (321).

8. The telescopic support leg structure according to any one of claims 1-7, wherein the support leg pedestal (2) is provided with a second flange (24), and when the support leg pedestal (2) is pulled forward to an outermost position, the second flange (24) abuts against an upper surface of the pressing block (31).

9. The telescopic support leg structure according to claim 8, wherein a limiting bump (311) configured to engage with the second flange (24) is further arranged on the upper surface of the pressing block (31).

10. A child safety seat, comprising the telescopic support leg structure according to any one of claims 1-9.

## Patentansprüche

1. Teleskopische Stützbein-Struktur, die umfasst: eine Basis (1) und einen Stützbein-Sockel (2), der gleitend mit der Basis (1) verbunden ist, wobei eine Verstärkungsstange (3) auf der Basis (1) montiert ist, der Stützbein-Sockel (2) gleitend mit der Verstärkungsstange (3) verbunden ist und ein Pressblock (31) und ein Stützblock (32) an einem Ende der Verstärkungsstange (3) angeordnet sind, das mit dem Stützbein-Sockel (2) verbunden ist; und wobei die teleskopische Stützbein-Struktur ferner eine Verbindungsstange (4), die sich durch den Stützbein-Sockel (2) erstreckt, umfasst, wobei die Verbindungsstange (4) an einer oberen Oberfläche der Verstärkungsstange (3) anliegt und zwischen dem Stützblock (32) und der Oberseite der Verstärkungsstange (3) eine erste Schiene (5) ausgebildet ist, die so konfiguriert ist, dass sie mit der Verbindungsstange (4) in Eingriff kommt, und wobei der Stützbein-Sockel (2) mit einem ersten Flansch (21) versehen ist und zwischen dem Pressblock (31) und der Basis (1) eine zweite Schiene (6) ausgebildet ist, die so konfiguriert ist, dass sie mit dem ersten Flansch (21) in Eingriff kommt.

2. Teleskopische Stützbein-Struktur nach Anspruch 1, wobei zwei Verstärkungsstangen (3) vorgesehen sind, und wobei die zwei Verstärkungsstangen (3) symmetrisch auf einer linken Seite bzw. einer rechten Seite des Stützbein-Sockels (2) angeordnet sind.

3. Teleskopische Stützbein-Struktur nach Anspruch 1, wobei die Basis (1) mit einer dritten Schiene (11) versehen ist und auf dem Stützbein-Sockel (2) eine Gleitsäule (22) angeordnet ist, die so konfiguriert ist, dass sie mit der dritten Schiene (11) in Eingriff kommt.

4. Teleskopische Stützbein-Struktur nach Anspruch 3, wobei die Gleitsäule (22) mit einem Befestigungselement (23) verbunden ist, das so konfiguriert ist, dass es verhindert, dass sich die Gleitsäule (22) von der dritten Schiene (11) löst.

5. Teleskopische Stützbein-Struktur nach Anspruch 1, wobei die Verstärkungsstange (3) aus Metall besteht.

6. Teleskopische Stützbein-Struktur nach Anspruch 1, wobei der Stützblock (32) und der Pressblock (31) einstückig mit der Verstärkungsstange (3) ausgebildet sind.

7. Teleskopische Stützbein-Struktur nach Anspruch 1, wobei der Stützblock (32) einen U-förmigen Schlitz (321) mit einer nach hinten gerichteten Öffnung aufweist und die Verbindungsstange (4) in den U-förmigen Schlitz (321) eingreift, wenn der Stützbein-Sockel (2) nach vorne in eine äußerste Position gezogen wird.

8. Teleskopische Stützbein-Struktur nach einem der Ansprüche 1 bis 7, wobei der Stützbein-Sockel (2) mit einem zweiten Flansch (24) versehen ist und der zweite Flansch (24) an einer oberen Oberfläche des Pressblocks (31) liegt, wenn der Stützbein-Sockel (2) nach vorne in eine äußerste Position gezogen wird.

9. Teleskopische Stützbein-Struktur nach Anspruch 8, wobei ferner an der oberen Oberfläche des Pressblocks (31) ein Begrenzungsanschlag (311) angeordnet ist, der so konfiguriert ist, dass er mit dem zweiten Flansch (24) in Eingriff kommt.

10. Kindersicherheitssitz, umfassend eine teleskopische Stützbein-Struktur nach einem der Ansprüche 1 bis 9.

## Revendications

1. Structure de jambe de support télescopique, comprenant une base (1) et un siège de jambe de support (2) relié de manière coulissante à la base (1), dans laquelle une tige de renfort (3) est montée sur la base (1), le siège de jambe de support (2) est relié de manière coulissante à la tige de renfort (3), et un bloc de pressage (31) et un bloc de support (32) sont disposés à une extrémité de la tige de renfort (3) reliée au siège de jambe de support (2) ; et la structure de jambe de support télescopique comprend en outre une bielle (4) s'étendant à travers le siège de jambe de support (2), dans laquelle la bielle (4) s'appuie contre une surface supérieure de la tige de renfort (3), un premier rail (5) configuré pour s'engager avec la bielle (4) est formé entre le bloc de support (32) et la surface supérieure de la tige de renfort (3), le siège de jambe de support (2) est pourvu d'une première bride (21), et un deuxième rail (6) configuré pour s'engager avec la première bride (21) est formé entre le bloc de pressage (31) et la base (1).

2. Structure de jambe de support télescopique selon la revendication 1, dans laquelle deux tiges de renfort (3) sont prévues, et les deux tiges de renfort (3) sont disposées de manière symétrique sur un côté gauche et un côté droit du siège de jambe de support (2), respectivement.

3. Structure de jambe de support télescopique selon la revendication 1, dans laquelle la base (1) est pourvue d'un troisième rail (11), et une colonne coulissante (22) configurée pour s'engager avec le troisième rail (11) est disposée sur le siège de jambe de support (2).

4. Structure de jambe de support télescopique selon la revendication 3, dans laquelle la colonne coulissante (22) est reliée à un élément de fixation (23) configuré pour empêcher la colonne coulissante (22) de se détacher du troisième rail (11).

5. Structure de jambe de support télescopique selon la revendication 1, dans laquelle la tige de renfort (3) est en métal.

6. Structure de jambe de support télescopique selon la revendication 1, dans laquelle le bloc de support (32) et le bloc de pressage (31) sont formés de manière intégrale avec la tige de renfort (3).

7. Structure de jambe de support télescopique selon la revendication 1, dans laquelle le bloc de support (32) comporte une fente en forme U (321) avec une ouverture vers l'arrière, et lorsque le siège de jambe de support (2) est tiré vers l'avant jusqu'à une position la plus extérieure, la bielle (4) est engagée dans la fente en forme U (321).

8. Structure de jambe de support télescopique selon l'une quelconque des revendications 1 à 7, dans laquelle le siège de jambe de support (2) est pourvu d'une deuxième bride (24), et lorsque le siège de jambe de support (2) est tiré vers l'avant jusqu'à une position la plus extérieure, la deuxième bride (24) s'appuie contre une surface supérieure du bloc de pressage (31).

9. Structure de jambe de support télescopique selon la revendication 8, dans laquelle une bosse de limitation (311) configurée pour s'engager avec la deuxième bride (24) est disposée également sur la surface supérieure du bloc de pressage (31).

10. Siège de sécurité pour enfant, comprenant la structure de jambe de support télescopique selon l'une quelconque des revendications 1 à 9.
